# EUROPÄISCHE PATENTANMELDUNG

(11) **EP 2 119 522 A1**
(43) Veröffentlichungstag der Anmeldung: **18.11.2009**
(21) Anmeldenummer: 09005795.1
(22) Anmeldetag: 25.04.2009
(51) Int. Cl.: B23D 59/00, B23Q 11/00

(54) **Staubfangsack**

(30) Priorität: 16.05.2008 DE 202008006723 U
(71) Anmelder: Metabowerke GmbH, 72622 Nürtingen (DE)
(72) Erfinder: Bergmann, Laurenz, 49733 Haren/Ems (DE)
(74) Vertreter: Gesthuysen, von Rohr & Eggert

(57) **Zusammenfassung**

Die Erfindung betrifft einen Staubfangsack für eine Werkzeugmaschine, insbesondere für eine spanend arbeitende Werkzeugmaschine, wie eine Kappsäge, eine Handkreissäge, eine Oberfräse o. dgl., mit einem Sackkorpus (1) aus einem Gewebe oder Gewirke, insbesondere aus Kunstfasermaterial, und einer Eintritts-und Anbringungsöffnung (2) am Sackkorpus (1), wobei der Sackkorpus (1) einen Staubfangraum (3) bildet. Dieser Staubfangsack zeichnet sich dadurch aus, daß im Inneren des Sackkorpus (1) eine Trennwand (4) vorgesehen ist, die das Innere des Sackkorpus (1) in einen mit der Eintritts- und Anbringungsöffnung (2) verbundenen Staubfangraum (3) und einen davon getrennten Stauraum (5) für Werkzeug, Zubehör o. dgl. unterteilt, und daß der Stauraum (5) von außen über eine eigene Eingriffsöffnung (6) zugänglich ist.

## Beschreibung

Die Erfindung betrifft einen Staubfangsack für eine Werkzeugmaschine, insbesondere für eine spanend arbeitende Werkzeugmaschine.

Spanend oder stauberzeugend arbeitende Werkzeugmaschinen sind halbstationäre Maschinen, wie Kappsägen oder Kreissägen sowie Handwerkzeugmaschinen, wie Handkreissägen, Oberfräsen o. dgl..

Ein Staubfangsack für eine solche Maschine hat regelmäßig einen Sackkorpus aus einem Gewebe oder einem Gewirke, insbesondere aus Kunstfasermaterial, und an diesem Sackkorpus eine Eintritts- und Anbringungsöffnung zum Anbringen des Staubfangsackes an einem entsprechenden Anschlußstutzen der Werkzeugmaschine.

Staubfangsäcke der in Rede stehenden Art sind insbesondere für Handwerkzeugmaschinen und leicht transportable, halbstationäre Werkzeugmaschinen als Hilfsmittel für den Benutzer verbreitet. Man benutzt einen Staubfangsack dann, wenn man die Werkzeugmaschine nicht ohne weiteres an eine Staubabsauganlage mittels eines Staubabsaugschlauches anschließen kann.

Der Staubfangsack liegt im Verpackungskarton einer Werkzeugmaschine und wird häufig nicht benutzt. Das kann zum einen daran liegen, daß der Benutzer auf die Verwendung des Staubfangsackes an der Werkzeugmaschine keinen Wert legt. Zum anderen kann es auch daran liegen, daß der Benutzer die Werkzeugmaschine an eine Staubabsaugeinrichtung angeschlossen hat.

Der Erfindung liegt das Problem zugrunde, den Staubfangsack in der Praxis optimaler nutzen zu können.

Die zuvor aufgezeigte Problemstellung ist bei einem Staubfangsack der in Rede stehenden Art dadurch gelöst, daß im Inneren des Sackkorpus eine Trennwand vorgesehen ist, die das Innere des Sackkorpus in einen mit der Eintritts- und Anbringungsöffnung verbundenen Staubfangraum und einen davon getrennten Stauraum für Werkzeug, Zubehör o. dgl. unterteilt, und daß der Stauraum von außen über eine eigene Eingriffsöffnung zugänglich ist. Bei dieser ersten Variante der Erfindung ist der Staubfangsack mit einer zweiten Funktion versehen worden. Er ist nämlich auch Aufbewahrungstasche für Werkzeug oder Zubehör der Werkzeugmaschine.

Bislang ist es häufig so, daß an der Werkzeugmaschine ein zusätzliches Klappfach oder eine Schublade vorgesehen sein muß. Das kann man ohnehin nur an halbstationären Werkzeugmaschinen realisieren. Bei Handwerkzeugmaschinen verbietet sich allein schon aus Handhabungsgründen eine solche Ausrüstung. Notwendiges Zubehör oder Werkzeug, beispielsweise solches zum Wechseln des Sägeblattes bei einer Kreissäge, verbleibt folglich häufig in der Verpackung der Werkzeugmaschine oder an anderer Stelle und ist dann im entscheidenden Moment nicht zur Hand.

Die erfindungsgemäße Zweitnutzung des Staubfangsackes bietet hier eine Lösung für das Problem. Das Werkzeug bzw. das Zubehör kann im Staubfangsack, bei dieser Variante in dem separaten Stauraum, bequem mitgeführt werden. Weil der Stauraum im Inneren des Sackkorpus vom Staubfangraum durch die Trennwand separiert ist, bleibt das Werkzeug bzw. das Zubehör sauber. Insbesondere gilt dies, wenn die Trennwand wirklich staubundurchlässig ist.

In einer zweiten Variante der Erfindung gemäß Anspruch 3 ist vorgesehen, daß außen am den Staubfangraum bildenden Sackkorpus eine einen Stauraum für Werkzeug, Zubehör o. dgl. bildende Aufnahmetasche angebracht, insbesondere aufgenäht ist, und daß der Stauraum von außen über eine eigene Eingriffsöffnung zugänglich ist. Auch die insoweit vom Staubfangsack separate, wenn auch mit diesem verbundene Aufnahmetasche kann aus einem Gewebe oder Gewirke, insbesondere aus Kunstfasermaterial, besteht.

Für die Eingriffsöffnung in den Stauraum des Staubfangsackes, sei er nun im Inneren des Sackkorpus oder in der zusätzlichen Aufnahmetasche ausgebildet, empfiehlt sich ein Verschlußmittel, insbesondere ein Klettverschluß oder ein Reißverschluß.

Auch der Sackkorpus für sich kann noch ein Verschlußmittel aufweisen, über das der Staubfangraum im Sackkorpus zugänglich ist. Der Staubfangraum kann so bequem von darin gesammeltem Staub und Spänen entleert werden.

Im folgenden wird die Erfindung anhand einer lediglich ein Ausführungsbeispiel darstellenden Zeichnung näher erläutert. In der Zeichnung zeigt
- Fig. 1: eine perspektivische, sehr schematische Ansicht einer halbstationären Werkzeugmaschine in Form einer Kappsäge mit einem daran angebrachten Staubfangsack und
- Fig. 2: ein bevorzugtes Ausführungsbeispiel eines erfindungsgemäßen Staubfangsackes für eine Werkzeugmaschine.

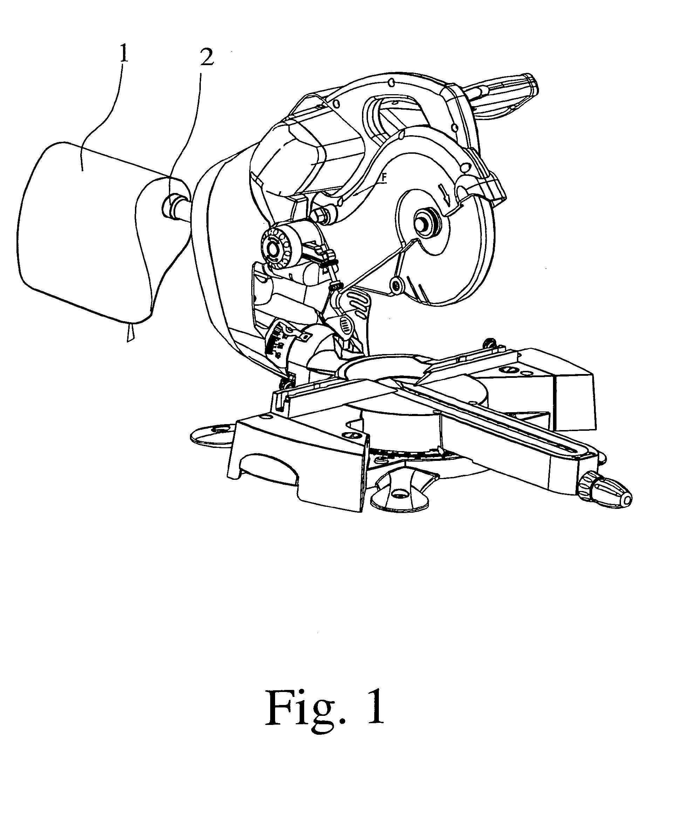

In Fig. 1 erkennt man, wo typischerweise ein Staubfangsack an einer Werkzeugmaschine sitzt, nämlich angebracht an einem Anschlußstutzen.

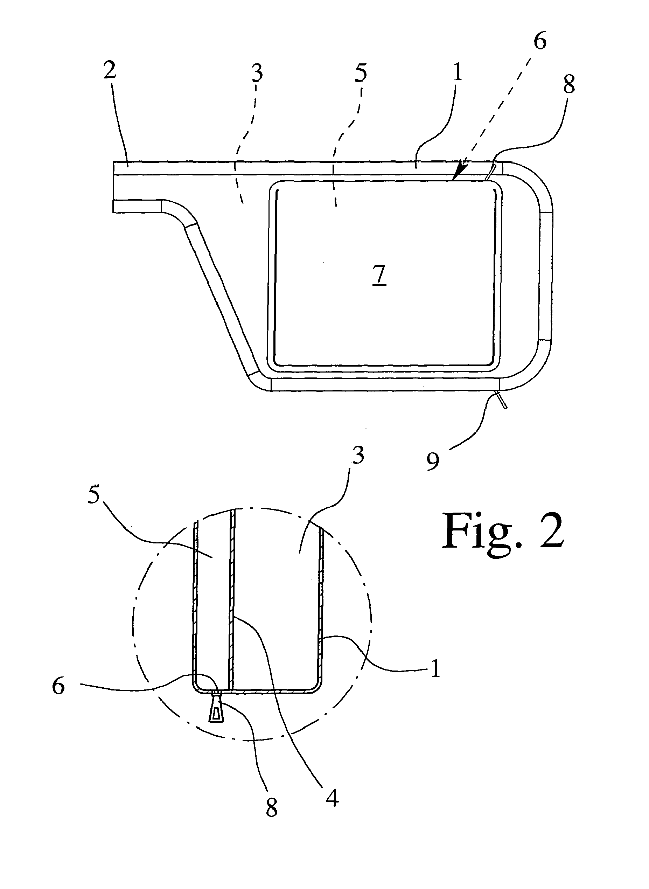

In Fig. 2 erkennt man ein bevorzugtes Ausführungsbeispiel eines erfindungsgemäßen Staubfangsackes. Dieser hat einen Sackkorpus 1 regelmäßig aus einem Gewebe oder Gewirke, insbesondere aus Kunstfasermaterial, und eine Eintritts-und Anbringungsöffnung 2 am Sackkorpus 1, mit der der Staubfangsack an dem genannten Anschlußstutzen der Werkzeugmaschine angebracht werden kann. Häufig befindet sich an der Eintritts- und Anbringungsöffnung 2 ein vorzugsweise elastischer Ring, mit dem der Staubfangsack auf den Anschlußstutzen aufgesteckt werden kann.

In einer ersten Variante, die in Fig. 2 unten im Ausschnitt schematisch im Schnitt dargestellt ist, hat der Sackkorpus 1 im Inneren einen Staubfangraum 3. Vom Staubfangraum 3 ist aber nicht der gesamte Sackkorpus 1 ausgefüllt, sondern im Inneren des Sackkorpus 1 befindet sich eine Trennwand 4, die das Innere des Sackkorpus 1 in den mit der Eintritts- und Anbringungsöffnung 2 verbundenen Staubfangraum 3 und einen davon getrennten Stauraum 5 für Werkzeug, Zubehör o. dgl. unterteilt. Der Stauraum 5 ist von außen über eine eigne Eingriffsöffnung 6 zugänglich, die in Fig. 2 in dem Ausschnitt angedeutet ist. Vorzugsweise ist die Trennwand 4 staubundurchlässig, so daß der Stauraum 5 sauber bleibt.

Fig. 2 zeigt in der hauptsächlichen Darstellung eine Alternative zu der zuvor geschilderten Variante, die dadurch gekennzeichnet ist, daß außen am den Staubfängraum bildenden Sackkorpus 1 eine einen Stauraum 5 für Werkzeug, Zubehör o. dgl. bildende Aufnahmetasche 7 angebracht, insbesondere aufgenäht ist, und daß der Stauraum 5 von außen über eine eigene Eingriffsöffnung 6 zugänglich ist. Die Aufnahmetasche 7 ist zweckmäßigerweise aus demselben oder einem ähnlichen Material wie der Staubfangsack hergestellt.

Für die Eingriffsöffnung 6 ist vorgesehen, daß diese zweckmäßigerweise mit einem Verschlußmittel 8, insbesondere einem Klettverschluß oder einem Reißverschluß, verschließbar ist. Das ist in Fig. 2 oben angedeutet.

Fig. 2 zeigt eine besondere Variante des erfindungsgemäßen Staubfangsackes. Hier ist nicht nur die Eingriffsöffnung 6 am Stauraum 5 des Staubfangsackes mit einem Verschlußmittel 8 - Reißverschluß - verschließbar. Hier hat vielmehr auch der Sackkorpus 1 als solcher im Bereich des Staubfangraums 3 eine Austragsöffnung, die mit einem eigenen Verschlußmittel 9, im dargestellten Ausführungsbeispiel ebenfalls ein Reißverschluß, verschließbar ist.

## Patentansprüche

1. Staubfangsack für eine Werkzeugmaschine, insbesondere für eine spanend arbeitende Werkzeugmaschine, wie eine Kappsäge, eine Handkreissäge, eine Oberfräse o. dgl., mit einem Sackkorpus (1) aus einem Gewebe oder Gewirke, insbesondere aus Kunstfasermaterial, und einer Eintritts- und Anbringungsöffnung (2) am Sackkorpus (1), wobei der Sackkorpus (1) einen Staubfangraum (3) bildet,
**dadurch gekennzeichnet, daß** im Inneren des Sackkorpus (1) eine Trennwand (4) vorgesehen ist, die das Innere des Sackkorpus (1) in einen mit der Eintritts- und Anbringungsöffnung (2) verbundenen Staubfangraum (3) und einen davon getrennten Stauraum (5) für Werkzeug, Zubehör o. dgl. unterteilt, und daß der Stauraum (5) von außen über eine eigene Eingriffsöffnung (6) zugänglich ist.

2. Staubfangsack nach Anspruch 1, **dadurch gekennzeichnet, daß** die Trennwand (4) staubundurchlässig ist.

3. Staubfangsack für eine Werkzeugmaschine, insbesondere für eine spanend arbeitende Werkzeugmaschine, wie eine Kappsäge, eine Handkreissäge, eine Oberfräse o. dgl., mit einem Sackkorpus (1) aus einem Gewebe oder Gewirke, insbesondere aus Kunstfasermaterial, und einer Eintritts- und Anbringungsöffnung (2) am Sackkorpus (1), wobei der Sackkorpus (1) einen Staubfangraum (3) bildet,
**dadurch gekennzeichnet, daß** außen am den Staubfangraum (3) bildenden Sackkorpus (1) eine einen Stauraum (5) für Werkzeug, Zubehör o. dgl. bildende Aufnahmetasche (7) angebracht, insbesondere aufgenäht ist, und daß der Stauraum (5) von außen über eine eigene Eingriffsöffnung (6) zugänglich ist.

4. Staubfangsack nach Anspruch 3, **dadurch gekennzeichnet, daß** die Aufnahmetasche (7) ebenfalls aus einem Gewebe oder Gewirke, insbesondere aus Kunstfasermaterial, besteht.

5. Staubfangsack nach einem der Ansprüche 1 bis 4, **dadurch gekennzeichnet, daß** die Eingriffsöffnung (6) mit einem Verschlußmittel (8), insbesondere einem Klettverschluß oder einem Reißverschluß, verschließbar ausgerüstet ist.

6. Staubfangsack nach einem der Ansprüche 1 bis 5, **dadurch gekennzeichnet, daß** am Sackkorpus (1) am Staubfangraum (3) eine mit einem Verschlußmittel (9), insbesondere einem Klettverschluß oder einem Reißverschluß, ausgerüstete Austragsöffnung vorgesehen ist.
